# NOUVEAU FASCICULE DE BREVET EUROPEEN

(11) **EP 2 344 720 B2**
(45) Date de publication et mention de la décision concernant l'opposition: **23.10.2019**
(45) Mention de la délivrance du brevet: 20.04.2016
(21) Numéro de dépôt: 09755969.4
(22) Date de dépôt: 06.10.2009
(51) Int. Cl.: F01D 5/14

(54) **AUBE DE ROTOR DE TURBINE AVEC PROTUBÉRANCES CÔTE EXTRADOS POUR ATTÉNUER LES PHÉNOMÈNES DE DÉCOLLEMENT**
TURBINENLAUFSCHAUFEL MIT AN DER SAUGSEITE ANGEORDNETEN VORSPRUNGEN ZUR VERMEIDERUNG DER ABLÖSUNG
TURBINE ROTOR BLADE WITH PROTRUSIONS ON THE SUCTION SIDE TO AVOID FLOW SEPARATION

(30) Priorité: 13.10.2008 FR 0856903
(43) Date de publication de la demande: 20.07.2011
(73) Titulaire: Safran Aircraft Engines, 75015 Paris (FR)
(72) Inventeur: ROUTIER, Pascal, 77350 Le Mée-sur-Seine (FR)
(74) Mandataire: Intès, Didier Gérard André
(86) Numéro de dépôt international: PCT/FR2009/051897
(87) Numéro de publication internationale: WO 2010/043798

(56) Documents cités:
- US-A- 3 578 264
- US-A- 3 578 264
- US-A- 3 588 005
- US-A- 3 588 005
- US-A- 4 813 633
- US-A- 4 822 249
- US-A- 4 830 315
- US-A- 4 830 315
- US-A1- 2002 079 405
- US-A1- 2002 079 405
- US-B1- 6 416 289

## Description

L'invention se rapporte à une aube de rotor de turbine, notamment une aube de roue mobile de turbine basse pression d'un turboréacteur d'avion, dont la tenue aérodynamique est améliorée pour éviter des "décollements" de la couche limite du flux d'air par rapport à la surface de l'aube, principalement à l'arrière de la région d'extrados.

Dans la conception de nouvelles formes d'aubes de turbine, notamment les aubes mobiles équipant la roue d'un même étage de la turbine, on recherche à augmenter les performances en modifiant certains paramètres structurels. Notamment, pour réduire le poids de la turbine, l'une des solutions consiste à diminuer le nombre d'aubes, ce qui implique de redessiner les profils d'aube pour respecter les angles de sortie et pour compenser autant que faire se peut, la perte de rendement.

Dans cette démarche, il est possible de mettre en évidence des risques de "décollement" nuisible de l'air entraîné, en extrados. Ces perturbations tourbillonnaires qui prennent naissance au voisinage de certaines zones de l'aube, en extrados, sont très coûteuses en performance. L'invention permet d'atténuer ces phénomènes de décollement. US 3578264 divulgue une aube de turbine avec des protubérances du côté extrados.

Plus particulièrement, l'invention concerne une aube de turbine telle que définie par la revendication 1.

Pour la détermination de l'emplacement de telles protubérances le long du bord de fuite, on procède à partir d'une représentation de la zone de décollement côté extrados (cette représentation peut s'obtenir par le calcul) et on choisit de placer de telles protubérances au voisinage de la zone de perturbation maximum telle que déterminée sans ces protubérances.

En procédant de la sorte, il est généralement de règle de placer au moins une protubérance précitée sensiblement à mi-hauteur du bord de fuite.

D'autres protubérances peuvent être avantageusement placées au voisinage de l'extrémité radiale interne dudit bord de fuite et/ou au voisinage de l'extrémité radiale externe dudit bord de fuite.

Généralement, les calculs aboutissent à placer plusieurs protubérances précitées réparties le long du tiers radial externe dudit bord de fuite.

La forme d'une telle protubérance est de préférence globalement celle d'un plot arrondi faisant saillie à la surface de l'extrados avec raccordement lisse à celle-ci.

Une section médiane de la protubérance, perpendiculaire au bord de fuite, a la forme d'une demi-onde avec raccordement lisse à la surface d'extrados.

De plus, une autre section de ladite protubérance perpendiculaire à ladite section médiane a la forme d'une ondulation présentant un extrémum central et des ondes latérales amorties. Autrement dit, vu selon cette section, ladite protubérance est semblable à la forme d'onde provoquée à la surface plane d'un liquide par la chute d'une goutte de liquide, cette forme d'onde n'étant pas cependant isomorphe circonférentiellement autour du point central.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une vue partielle en perspective d'une roue de rotor de turbine munie d'aubes conformes à l'invention ;
- la figure 2 est une coupe partielle de l'aube, illustrant le profil d'une protubérance conforme à l'invention ;
- la figure 3 est une coupe partielle dans un autre plan illustrant le profil de ladite protubérance ;
- la figure 3A est une vue analogue à la figure 3 illustrant une variante ; et
- la figure 4 est une vue schématique illustrant une étape de la méthode de détermination du nombre et des emplacements des protubérances le long du bord de fuite.

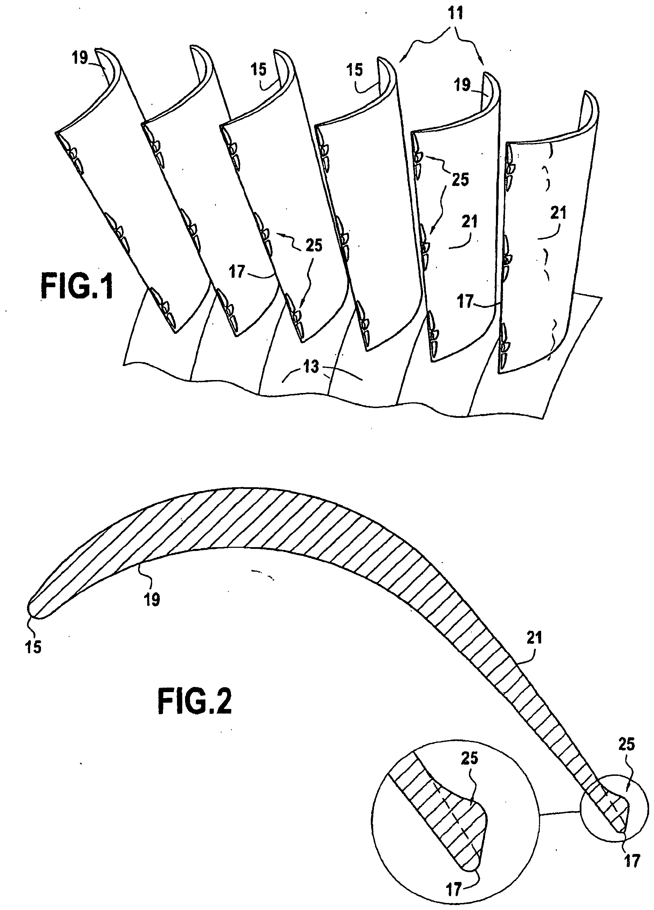

La figure 1 représente plusieurs aubes 11 de rotor, en l'occurrence des aubes mobiles orientées globalement radialement à la périphérie d'un disque rotatif 13. Classiquement, chaque aube, d'une certaine épaisseur évolutive d'avant en arrière est incurvée entre un bord d'attaque 15 et un bord de fuite 17. La partie concave ou intrados 19 est lisse. La partie convexe ou extrados 21 est lisse sur la plus grande partie de sa surface à l'exception, selon l'invention, de quelques protubérances 25 distribuées au bord de fuite et le long du bord de fuite 17. De façon générale, une telle protubérance 25 a de préférence globalement la forme d'un plot arrondi faisant saillie à la surface de l'extrados 21 avec raccordement lisse à celle-ci.

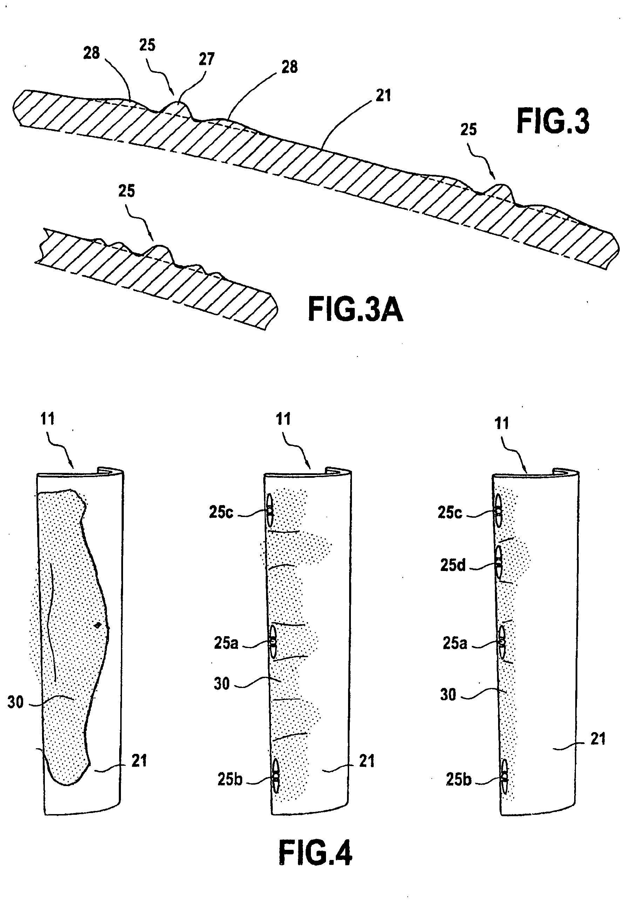

Préférentiellement, le profil de la section de la protubérance, perpendiculairement à la surface de l'extrados au point où elle se trouve, évolue entre les formes illustrées aux figures 2 et 3.

Ainsi, comme le montre la figure 2, une section médiane de ladite protubérance 25 faite perpendiculairement au bord de fuite 17 a la forme d'une simple demi-onde avec raccordement lisse à la surface d'extrados 21. On remarque que la pente de cette demi-onde est plus faible vers l'avant que vers l'arrière. Selon cette section, la protubérance vient se raccorder avec continuité au bord de fuite.

En revanche, si on considère une autre section de la même protubérance perpendiculaire à la précédente, c'est-à-dire parallèlement au bord de fuite comme représenté figure 3, on note que celle-ci a une forme plus complexe, à savoir une ou plusieurs ondulations présentant un extrémum central 27 et des ondes latérales amorties 28. Sur la variante de la figure 3A, on voit que la section de la protubérance 25 comporte plusieurs ondulations amorties de part et d'autre de l'extrémum. Comme mentionné précédemment, cette section est comparable à l'onde provoquée à la surface calme d'un liquide par la chute d'une goutte de liquide. Si on "tourne" autour de la protubérance, on passe d'une section à l'autre, avec continuité, en un quart de tour.

La forme préférentielle de la protubérance étant ainsi définie, on va maintenant décrire les emplacements de telles protubérances et la façon de déterminer ces emplacements.

La figure 4 représente schématiquement et de gauche à droite les différentes phases du positionnement des protubérances sur une aube 11 vue selon la surface d'extrados 21. La partie grisée représente la zone dite "de décollement" 30 du côté de l'extrados et au voisinage du bord de fuite.

On voit que sans protubérance, cette zone de décollement 30 s'étend sur pratiquement toute la hauteur de l'aube à partir du bord de fuite, avec un maximum de largeur sensiblement à mi-hauteur. L'analyse de cette forme conduit à placer une première protubérance 25a au voisinage de la zone de perturbations maximum, c'est-à-dire à mi-hauteur de l'aube, au bord de fuite. Le résultat de cette première simulation, non représentée, fait apparaître une diminution de la surface de perturbation à mi-hauteur mais des perturbations persistantes aux extrémités radiales, interne et externe. Ceci conduit à placer une autre protubérance 25b au voisinage de l'extrémité radiale interne du bord de fuite et/ou au voisinage de l'extrémité radiale externe 25c du bord de fuite. Ainsi, par exemple, la disposition de trois protubérances, comme indiqué, qui correspond aussi au mode de réalisation visible sur la figure 1, aboutit à réduire la largeur de la zone de perturbations ou zone de décollement sur pratiquement toute la hauteur radiale de l'aube avec cependant une zone de perturbation prononcée persistance entre la protubérance centrale et la protubérance extérieure.

On constate que, conformément à la méthode mise au point dans le cadre de l'invention, le fait de placer une quatrième protubérance 25d le long du tiers radial externe du bord de fuite entre la protubérance centrale 25a et la protubérance extérieure 25c aboutit à réduire cette dernière zone de décollement.

## Revendications

1. Aube de rotor de turbine, présentant un intrados lisse, un extrados (21), et un bord de fuite, **caractérisée en ce que**
l'extrados est lisse sur la plus grande partie de sa surface à l'exception de quelques protubérances (25) distribuées le long du bord de fuite (17) et au bord de fuite,
une section médiane desdites protubérances perpendiculaire au bord de fuite a la forme d'une demi-onde avec raccordement lisse à la surface d'extrados,
une section desdites protubérances perpendiculaire à ladite section médiane a la forme d'une ondulation présentant un extrémum central et des ondes latérales amorties,
dans ladite section médiane, lesdites protubérances viennent se raccorder avec continuité au bord de fuite ; et
la pente de la demi-onde est plus faible vers l'avant que vers l'arrière.

2. Aube de rotor de turbine selon la revendication 1, **caractérisée en ce que** l'emplacement desdites protubérances (25) le long dudit bord de fuite est choisi au voisinage de la zone de décollement maximum (30), calculée sans cette protubérance.

3. Aube de rotor de turbine selon la revendication 1 ou 2, **caractérisée en ce qu'**elle comporte une protubérance (25a) précitée située sensiblement à mi-hauteur dudit bord de fuite.

4. Aube de rotor de turbine selon l'une des revendications précédentes, **caractérisée en ce qu'**elle comporte une telle protubérance (25b) au voisinage de l'extrémité radiale interne dudit bord de fuite.

5. Aube de rotor de turbine selon l'une des revendications précédentes, **caractérisée en ce qu'**elle comporte une telle protubérance (25c) au voisinage de l'extrémité radiale externe dudit bord de fuite.

6. Aube de rotor de turbine selon l'une des revendications précédentes, **caractérisée en ce qu'**elle comporte plusieurs protubérances (25c-25d) précitées réparties le long du tiers radial externe dudit bord de fuite.

7. Aube de rotor de turbine selon l'une des revendications précédentes, **caractérisée en ce qu'**elle constitue une aube mobile.

8. Aube de rotor de turbine selon l'une des revendications précédentes, **caractérisée en ce que** lesdites protubérances ont globalement la forme d'un plot arrondi faisant saillie à la surface de l'extrados (21) avec raccordement lisse à celle-ci.

9. Roue de turbine, **caractérisée en ce qu'**elle est équipée d'aubes selon l'une des revendications précédentes.

## Patentansprüche

1. Turbinenrotorschaufel, die eine glatte Vorderseite, eine Rückseite (21) und eine Austrittskante aufweist, **dadurch gekennzeichnet, dass**
die Rückseite über den größten Teil ihrer Oberfläche, mit Ausnahme von einigen Vorsprüngen (25), die entlang der Austrittskante (17) und an der Austrittskante verteilt sind, glatt ist,
ein Mittelabschnitt dieser Vorsprünge senkrecht zu der Austrittskante die Form einer Halbwelle mit glattem Anschluss an die Rückseitenfläche aufweist,
ein Abschnitt dieser Vorsprünge senkrecht zu diesem Mittelabschnitt die Form einer Welligkeit mit einem zentralen Extremwert und gedämpften Seitenwellen aufweist,
in diesem Mittelabschnitt, diese Vorsprünge in Kontinuität mit der Austrittskante verbunden sind; und
die Neigung der Halbwelle nach vorne geringer ist als nach hinten.

2. Turbinenrotorschaufel nach Anspruch 1, **dadurch gekennzeichnet, dass** die Stelle der Vorsprünge (25) entlang der Austrittskante in der Nähe des Maximalablösungsbereichs (30), ohne diesen Vorsprung gerechnet, gewählt ist.

3. Turbinenrotorschaufel nach Anspruch 1 oder 2, **dadurch gekennzeichnet, dass** sie einen vorgenannten Vorsprung (25a), der im Wesentlichen auf halber Höhe der Austrittskante gelegen ist, umfasst.

4. Turbinenrotorschaufel nach einem der vorhergehenden Ansprüche, **dadurch gekennzeichnet, dass** sie einen solchen Vorsprung (25b) in der Nähe des inneren radialen Endes der Austrittskante umfasst.

5. Turbinenrotorschaufel nach einem der vorhergehenden Ansprüche, **dadurch gekennzeichnet, dass** sie einen solchen Vorsprung (25c) in der Nähe des äußeren radialen Endes der Austrittskante umfasst.

6. Turbinenrotorschaufel nach einem der vorhergehenden Ansprüche, **dadurch gekennzeichnet, dass** sie mehrere vorgenannte Vorsprünge (25c-25d), die entlang des äußeren radialen Drittels der Austrittskante verteilt sind, umfasst.

7. Turbinenrotorschaufel nach einem der vorhergehenden Ansprüche, **dadurch gekennzeichnet, dass** sie eine Laufschaufel bildet.

8. Turbinenrotorschaufel nach einem der vorhergehenden Ansprüche, **dadurch gekennzeichnet, dass** die Vorsprünge im Ganzen die Form eines abgerundeten, an der Oberfläche der Rückseite (21) vorspringenden Klötzchens, mit glattem Anschluss an diese, aufweisen.

9. Turbinenrad, **dadurch gekennzeichnet, dass** es mit Schaufeln nach einem der vorhergehenden Ansprüche ausgestattet ist.

## Claims

1. A turbine rotor blade, having a smooth pressure side, a suction side (21), and a trailing edge, **characterized in that**
the suction side is smooth over a major fraction of its surface with the exception of a few protuberances (25) that are distributed along the trailing edge (17) and at the trailing edge,
a middle section of said protuberances perpendicular to the trailing edge is in the shape of a half-wave that connects smoothly with the suction side surface,
a section of said protuberances perpendicular to said middle section is in the form of an undulation presenting a central extremum and damped side waves,
in said middle section, said protuberances connect with continuity with the trailing edge; and
the slope of the half-wave is shallower towards the front than towards the rear.

2. A turbine rotor blade according to claim 1, **characterized in that** the location of such a protuberance (25) along said trailing edge is selected to be in the vicinity of the maximum separation zone (30) as calculated without said protuberance.

3. A turbine rotor blade according to claim 1 or 2, **characterized in that** it includes an above-mentioned protuberance (25a) situated substantially at half-height along said trailing edge.

4. A turbine rotor blade according to any one of the preceding claims, **characterized in that** it includes one such protuberance (25b) in the vicinity of the inner radial end of said trailing edge.

5. A turbine rotor blade according to any one of the preceding claims, **characterized in that** it includes one such protuberance (25c) in the vicinity of the outer radial end of said trailing edge.

6. A turbine rotor blade according to any one of the preceding claims, **characterized in that** it includes a plurality of above-mentioned protuberances (25c-25d) distributed along the radial outer third of said trailing edge.

7. A turbine rotor blade according to any one of the preceding claims, **characterized in that** it constitutes a moving blade.

8. A turbine rotor blade according to any one of the preceding claims, **characterized in that** the shape of these protuberances is generally that of a rounded stud projecting from the suction side surface (21) and connecting smoothly therewith.

9. A turbine wheel, **characterized in that** it is fitted with blades according to one of the preceding claims.
